# EUROPÄISCHE PATENTANMELDUNG

(11) **EP 0 837 313 A2**
(43) Veröffentlichungstag der Anmeldung: **22.04.1998**
(21) Anmeldenummer: 97250304.9
(22) Anmeldetag: 16.10.1997
(51) Int. Cl.: G01N 1/28, G01N 21/35, G01N 21/47

(54) **Verfahren und Vorrichtung zur Farbmessung**

(30) Priorität: 21.10.1996 DE 19644617
(71) Anmelder: Dr. Bruno Lange GmbH, D-14163 Berlin (DE)
(72) Erfinder: Brücker, Friedhelm, Dipl.-Ing., 40549 Düsseldorf (DE); Möller-Kemsa, Jürgen, Dipl.-Ing., 40235 Düsseldorf (DE)
(74) Vertreter: Christiansen, Henning, Dipl.-Ing.

(57) **Zusammenfassung**

Die Erfindung betrifft ein Verfahren zur Messung der Farbe einer in einem Behälter befindlichen Probe von körnigem, vorzugsweise granuliertem, Gut mittels eines einen Meßkopf (2) und eine Auswerteeinrichtung aufweisenden Farbmeßgeräts (1), durch Erfassung der Remission eines von dem Meßkopf auf die Oberfläche der Probe (22) ausgesandten Meßstrahls, wobei die Probe (22) in ein rahmen- oder ringförmigen Behälter (22.1) eingefüllt wird, zur Erzeugung einer für die Messung im wesentlichen homogenen und ebenen Probenoberfläche von einer der offenen Seiten des Behälters (22.1) mittels einer Presse durch einen Stempel gegen ein die andere Öffnungsseite abschließendes, eine Druckfläche mit einer glatten Oberfläche aufweisendes Gegenelement auf die Probe ein Preßdruck ausgeübt wird sowie nach Entfernen von Gegenelement und Probe voneinander die Farbmessung mittels des Meßkopfes (2) von der Seite her vorgenommen wird, welche zuvor dem Gegenelement benachbart war sowie eine entsprechende Vorrichtung.

## Beschreibung

Die Erfindung betrifft ein Verfahren zur Farbmessung von körnigem Gut und eine Vorrichtung zur Durchführung des Verfahrens.

Es ist bekannt, Farbmessungen bei pastösen oder in granulierter bzw. gekörnter Form vorliegenden Proben mittels einer Küvettenmessung durchzuführen. Bei dieser Meßmethode wird die Oberfläche einer in einer Küvette befindlichen Probe mit einem im wesentlichen senkrecht von oben auftreffenden Lichtstrahl beleuchtet und das durch Remission zurückgeworfene Licht ausgewertet.

Das 7 wird dabei wesentlich von der Oberflächenstruktur des körnigen Probenmaterials beeinflußt, welches beim Einbringen in die Küvette in Wechselwirkung mit der transparenten Wandung tritt, was zu scheinbaren örtlichen Veränderungen der Probenfarbe führt. Da die Remission direkt von der Uniformität der Oberfläche der zu vermessende Probe abhängt, sind bei dieser Meßmethode Fehlerquoten von bis zu ±3% (bezogen auf Weiß = 100) nicht zu vermeiden. Ein Meßfehler in dieser Größenordnung ergibt sich bei der Farbmessung insbesondere durch Spiegelungen, welche durch Lufteinschluß zwischen den Partikeln des zu vermessenden Materials bedingt sind, und durch eine undefinierte Schattenbildung wegen der in einer bestimmten, körnungsabhängigen Schwankungsbreite unterschiedlich großen Partikel.

Aus CH 414 205 ist ein Verfahren zur fotoelektrischen Messung der Helligkeit von trockenen bis nassen Müllerei- und Teigwarenprodukten bekannt, bei dem ein Fotoelement durch einen von der Produktprobe remittierten Lichtstrom beaufschlagt und die Helligkeit der Produktprobe fotoelektrisch gemessen und direkt angezeigt wird. Die Produktprobe befindet sich hierbei in einer mit einer Glas- oder Plexiglasplatte abgedeckten Küvette, welche durch ein Hydrauliksystem gegen ein Objektiv des Meßkopfes gedrückt wird. Hierdurch soll der Einfluß von Schüttung und Granulation der Produktprobe minimiert werden. Für die Messung nasser Proben wird diese Vorrichtung dadurch modifiziert, daß der Meßkopf umgedreht und auf das Objektiv von oben eine Küvette mit Planglasboden aufgesetzt wird.

Aus DE 295 12 646 U1 ist eine Vorrichtung zur spektralen Farbwertemessung von mit einem Dünnfilmherstellungsprozeß auf ein Substrat aufgebrachten Schichten bekannt, bei der das Prinzip der Ulbrichtschen Kugel für die Ausführung der Lichtquelle genutzt wird.

Ausgehend von den Mängeln des Standes der Technik, liegt der Erfindung die Aufgabe zugrunde, ein Verfahren zur Farbmessung für körniges Gut nebst einer Vorrichtung zur Durchführung dieses Verfahrens anzugeben, welches sich durch eine große Meßgenauigkeit auszeichnet und mit einfachen Mitteln durchführbar ist. Die Vorrichtung soll darüber hinaus einfach handhabbar sein.

Diese Aufgabe wird durch die in den Ansprüchen 1 und 5 angegebenen Maßnahmen gelöst.

Die Erfindung schließt die technische Lehre ein, daß die Genauigkeit bei Farbmessungen von körnigem, vorzugsweise granuliertem, Gut in vorteilhafter Weise heraufgesetzt werden kann, wenn vor dem Meßvorgang durch Kompression des Probengutes bei im wesentlichen konstanter Krafteinwirkung pro Flächeneinheit eine Egalisierung bzw. Homogenisierung der freien, vom Meßlicht zu erfassenden Oberfläche des zu vermessenden Guts vorgenommen wird. Auf diese Weise fällt das Licht ohne störende Glas-Zwischenschicht direkt auf die Probe ein und die Messung bleibt unverfälscht. Auch werden die Messung beeinträchtigende Lufteinschlüsse innerhalb der Probensubstanz weitgehend vermieden. Die damit erzielbaren Meßbedingungen sichern gute Vergleichbarkeit der erzielten Meßergebnisse.

Entsprechend einer bevorzugten Ausführungsform des Verfahrens zur Farbmessung wird mit einem universellen, einen Meßkopf und eine Auswerteeinrichtung aufweisenden Farbmeßgerät die Oberfläche der Probe des zu vermessenden Gutes in einem Behälter mit einer von dem Meßkopf abgegebenen Strahlung einer vorbestimmten Wellenlänge bestrahlt und aus der Remission die Farbe ermittelt.

Das Verpressen der zur Farbmessung vorgesehen Probe führt dabei in vorteilhafter Weise zu einer Verdichtung der oft eine unterschiedliche Größe und Form aufweisenden Partikel und schafft eine im wesentlichen homogene Oberfläche auch für die später dem Meßkopf des Farbmeßgerätes zugewandte Seite der Probe.

Um sicherzustellen, daß die verwendete Probenmenge unkritisch ist, wird mittels des Preßwerkzeugs die Probe in den Probenbehälter hinein gegen eine feststehende Matrize komprimiert, die nur während des Preßvorgangs einen durch ein Andruckelement gebildeten Boden aufweist. Dieser Boden wird nach dem Preßvorgang entfernt.

Nach einer günstigen Weiterbildung der Erfindung ist somit als Probenbehälter ein rahmen- oder ringförmiger, insbesondere aber im wesentlichen hohlzylindrisch, ausgebildeter Behälter aus Metall vorgesehen. Dieser bildet dabei an seinem einen Ende die Führung für den Preßstempel und am anderen Ende eine definierte Anschlagfläche für die Blende des Farbmeßgeräts, welche der Probenoberfläche möglichst dicht benachbart sein muß, damit der eine Ulbrichtsche Kugel bildende Meßraum die Probenoberfläche - wie für derartige Messungen erforderlich - tangieren kann.

Es ist ersichtlich, daß das Probenbehälter in seiner einfachsten Ausführung einen Hohlzylinder mit paralleler Boden- und Deckfläche bildet, welche senkrecht zu seiner Mittelachse stehen. Dabei stellt dann die Innenwandung des Hohlzylinders die Führung für den Preßkolben dar, und die Stirnseite des anderen Endes ist die Anschlagfläche für die Blende. Bei entsprechender Bemessung kann hier im Prinzip ein Rohrabschnitt verwendet werden - es sind aber komplizierter ausgestaltete geometrische Gebilde geeignet, wenn sie den vorstehenden Bedingungen genügen.

Wenn mittels der Pressvorrichtung die Probe komprimiert wird, entsteht eine freitragende "Tablette", deren Unterseite mit der Unterkante des rohrförmigen Probenbehälters abschließt. Diese bildet dann eine definierte Anlagefläche für den Meßvorgang, wobei die Meßfläche der Probe bündig mit der Kante des Behälters ist, dessen Stirnfläche somit eine Bezugsfläche als Anschlag für die Blende der Meßvorrichtung bildet. Die Füllmenge ist dabei unkritisch, sie muß lediglich ausreichend groß gewählt werden, so daß sich bei der jeweiligen Substanz durch das Verpressen eine selbsttragende "Tablette" bildet. Sollte dies versehentlich einmal nicht der Fall sein, kann der Bedienende seinen Fehler sofort dadurch erkennen, daß er keine brauchbare Messung durchführen kann, weil die Probensubstanz in diesem Fall aus dem Probenbehälter herausfällt und keine Farbmessung möglich ist. Dasselbe gilt, wenn versehentlich gar kein oder ein zu geringer Preßdruck ausgeübt wird.

Um einerseits das Einfüllen der Probensubstanz zu erleichtern und andererseits auch zu verhindern, daß die Meßeinrichtung durch herabfallende lose Probenteilchen verschmutzt wird, erfolgt bevorzugt sowohl das Verpressen als auch das Messen von oben her, wobei der rahmen- bzw. ringförmige Probenbehälter zwischen dem Preß- und dem Meßvorgang um 180° um eine horizontale Achse gedreht wird. Hierzu wird weiter unten eine vorteilhafte Weiterbildung einer Vorrichtung beschrieben, welche die dazu notwendigen Handhabungen erleichtert.

Das Verpressen wird bevorzugt mit einer manuell bedienbaren Presse, vorzugsweise in Form einer einen Handhebel aufweisenden konventionellen Tablettenpresse, vorgenommen.

Die zur Durchführung des Farbmeßverfahrens vorgesehene Vorrichtung weist entsprechend einer bevorzugten Ausführungsform der Erfindung ein Trägersystem auf, auf welchem eine Preßvorrichtung zum Komprimieren einer Probe des zu vermessenden Gutes und eine Haltevorrichtung für den Meßkopf des Farbmeßgerätes angeordnet sind. Die Haltevorrichtung fixiert den Meßkopf in einer Position, in welcher der Meßvorgang durchgeführt werden kann.

Sowohl für die Preßvorrichtung als auch für die Haltevorrichtung ist eine als gemeinsamer Sockel ausgebildete Aufnahmeeinrichtung vorgesehen, auf welcher der die zu komprimierende bzw. die komprimierte und zu vermessende Probe enthaltende Behälter jeweils unter der entsprechenden Vorrichtung positioniert werden kann. Die Sockelhöhe der Aufnahmeeinrichtung ist in vorteilhafter Weise derart gewählt, daß das Verpressen bzw. die Farbmessung ohne Veränderung der Position von Preßvorrichtung bzw. Meßkopf vorgenommen werden kann.

Nach einer weiteren vorteilhaften Ausführungsform der Erfindung ist der Meßkopf des Farbmeßgerätes an dem Ständer der Presse befestigt. Dazu trägt der Ständer an seiner Rückseite - vorzugsweise um 180° gegenüber dem Preßsystem versetzt - eine Halterung zum Fixieren des Meßkopfes. Der Ständer der Presse ist mit seinem Fuß in der Trägerplatte der Vorrichtung drehbar gelagert, so daß der in der Halterung befindliche Meßkopf durch eine Schwenkbewegung des Ständers in Meßposition über den nach oben offenen Behälter gebracht werden kann. Der Behälter mit der zu vermessenden Materialprobe kann somit in günstiger Weise nach dem Preßvorgang in seiner Position auf der Aufnahmeeinrichtung unter dem in seine Ausgangsposition verbrachten Preßstempel der Preßvorrichtung verbleiben, wodurch das gesamte Meßverfahren verkürzt und in seiner Handhabung erheblich vereinfacht wird. Dazu sind der Abstand der Längsachse des in der Halterung befestigten Meßkopfes von der Längsachse des Ständers und der Abstand der Längsachse des Preßstempels der Preßvorrichtung von der Längsachse des Ständers gleich gewählt.

Entsprechend einer günstigen Weiterbildung der Erfindung weist der Ständer der Handhebelpresse in seiner Fußpunktlagerung Rastmittel auf, durch welche der Stempel der Hebelpresse bzw. der Meßkopf des Farbmeßgerätes - stets um den gleichen Winkel geschwenkt - in einer festgelegten Position über der zu vermessenden Probe fixierbar sind.

Nach dem Preßvorgang und während die Preßvorrichtung von der Probe ausgeschwenkt und die Meßvorrichtung eingeschwenkt wird, kann die Probenaufnahme mit der Probe leicht in der Auflagevorrichtung umgedreht werden.

Um die Meßöffnung des Meßkopfes zwecks Verringerung eines die Messung störenden Fremdlichteinfalls so dicht wie möglich über der zu vermessenden Probe positionieren zu können, ist die den Meßkopf tragende Halterung längs des Ständers der Hebelpresse verfahrbar angeordnet.

Es ist ersichtlich, daß - je nach den jeweiligen Anforderungen - die verschiedenen Handhabungen zum Probeneinfüllen und Messen auch mittels entsprechender zusätzlicher Vorrichtungen unter Beachtung der hier gegebenen Lehre auch weitgehend (bis vollständig) automatisiert ausgeführt werden können.

Mit den Maßnahmen gemäß der Erfindung lassen sich die erwähnten Meßfehler ohne weiteres auf ±0,3% reduzieren.

Andere vorteilhafte Weiterbildungen der Erfindung sind in den Unteransprüchen gekennzeichnet bzw. werden nachstehend zusammen mit der Beschreibung bevorzugter Ausführungen der Erfindung anhand der Figuren näher dargestellt. Es zeigen:
Figur 1 eine erste Ausführungsform der Vorrichtung zur Durchführung des erfindungsgemäßen Verfahrens in perspektivischer Darstellung,
Figur 1a ein Detail der Ausführungsform gemäß Figur 1 im Schnitt,
Figur 1b ein weiteres Detail der Ausführungsform gemäß Figur 1 im Schnitt,
Figur 2 eine günstige Weiterbildung der in Figur 1 dargestellten Vorrichtung sowie
Figur 3 die in Figur 2 gezeigte Vorrichtung als Teilschnittdarstellung in Seitenansicht.

Das erfindungsgemäße Verfahren soll nachfolgend anhand der verschiedenen dargestellten Vorrichtungen zur Durchführung dieses Verfahrens näher beschrieben werden.

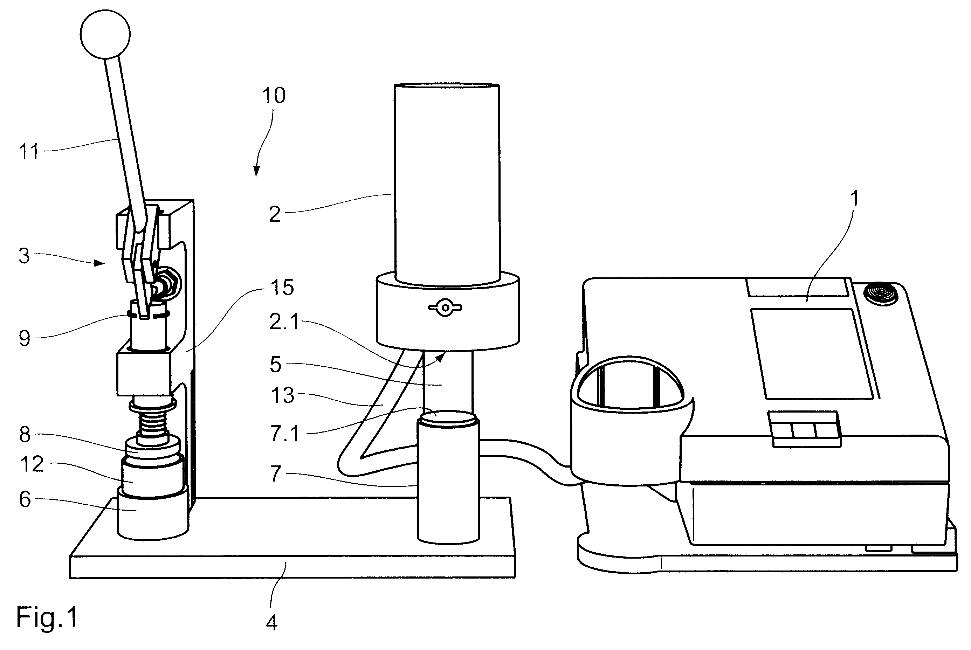

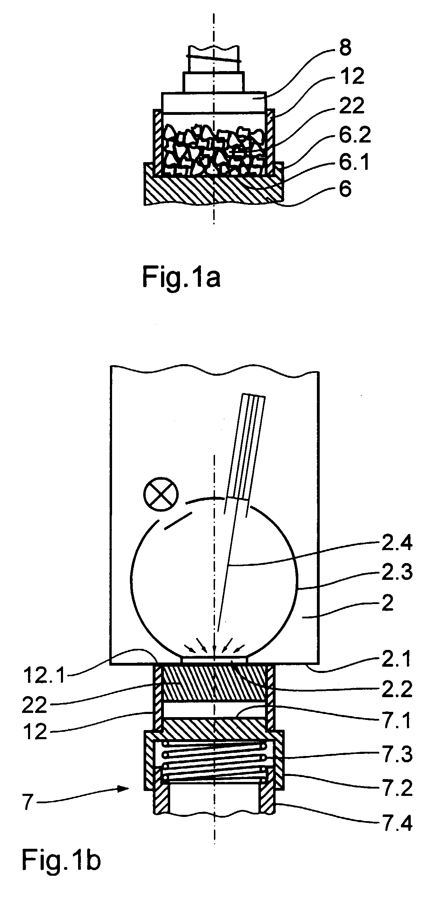

Die in Figur 1 dargestellte Vorrichtung 10 weist eine Haltevorrichtung 5 für den Farbmeßkopf 2 eines Farbmeßgerätes 1 und eine Hebelpresse 3 auf, welche auf einer gemeinsamen Trägerplatte 4 angeordnet sind. Unterhalb der Meßöffnung 2.1 des Meßkopfes befindet sich - auf gleicher Achse angeordnet - ein Sockel 7 zum Ablegen eines hohlzylindrischen Behälters 12, in welchem sich die mittels der Hebelpresse 3 vor dem Farbmeßvorgang zu einer "Tablette" komprimierte (weiter unten näher beschriebene) Probe des zu vermessenden, körnigen Materials 22 befindet. Der Sockel weist einen Ansatz 7.1 zum Zentrieren des Behälters auf, dessen Außendurchmesser an den Innendurchmesser der hohlzylindrischen Form des Behälters angepaßt ist.

Die Bearbeitung der Probe geht dabei wie folgt vor sich: Eine Matrize 6 dient zur Aufnahme des Behälters 12 unter dem Preßstempel 8 der Hebelpresse 3. Der mittels des Handhebels 11 betätigbare Preßstempel 8 ist in dem Ständer 15 der Handhebelpresse 3 geführt und weist Hubbegrenzungsmittel 9 auf. Diese Hubbegrenzungsmittel verhindern einen Überhub und stellen sicher, daß der Preßstempel nicht die Matrize beschädigt.

Der Preßvorgang selbst ist in der Schnittdarstellung gemäß Figur 1a noch einmal näher wiedergegeben: Innerhalb eines umlaufenden Rands 6.2 eines die Preßmatrize bildenden Gegenelements 6 mit einer Druckfläche 6.1 wird der hohlzylindrische Behälter 12 eingesetzt und die Probensubstanz 22 eingefüllt. Die Menge ist hierbei im wesentlichen unkritisch. Die Befüllung wird bequemerweise so vorgenommen, daß der Behälter bis kurz unterhalb seines Randes befüllt ist, so daß nicht die Gefahr des Verschüttens von Substanz besteht. Mittels des Preßstempels 6 wird das Probenmaterial 22 - wie ersichtlich - zu einer Tablette komprimiert. Es weist damit eine gegenüber der Höhe des Behälters 12 weiter verringerte Höhe auf und ist selbsttragend. Die polierte und ebene Andruckfläche 6.1 sorgt für eine Glättung und Einebnung der daran anliegenden Probenoberfläche, deren Inhomogenitäten damit weitgehend ausgeglichen werden, so daß Verfälschungen der anschließenden Farbmessung durch Lufteinschlüsse etc. vermieden werden.

Nach dem Verpressen der Probe 22 wird - wie wieder aus Figur 1 ersichtlich - der Preßstempel 8 wieder in seine Ausgangsposition verbracht und der Probebehälter 12 auf einem Sockel 7 unterhalb des Meßkopfes 2 abgestellt, so daß die durch das Verpressen homogenisierte Oberfläche 22.1 der zu vermessende körnigen Probe 22 der Meßöffnung 2.1 des Meßkopfes 2 gegenübersteht.

Das Farbmeßgerät 1 steht - in Abhängigkeit von der Länge des Verbindungskabels 13 des Meßkopfes 2 - in unmittelbarer Nähe der Vorrichtung 10, so daß das Meßergebnis sofort erhältlich ist.

Der Meßvorgang selbst ist in Figur 1b wiedergegeben. Der Behälter 12 mit der Probe wird um 180° gedreht, so daß der Freiraum im Behälter auf den Ansatz 7.1 des Sockels 7 gelangt und der Behälter zentriert wird. Die Probe 22 schließt bündig mit der (jetzt oberen) Stirnfläche 12.1 des hohlzylindrischen Behälters 12 ab. Diese Stirnfläche ist gleichzeitig die Bezugsfläche für eine Anlagefläche 2.1 des Meßkopfes. Damit tangiert die eingeebnete Fläche der Probe 22 über eine in der Anlagefläche 2.1 vorgesehene Blendenöffnung 2.2 die in dem Meßkopf 2 vorgesehene Ulbrichtsche Kugel 2.3, welche als Hohlreflektor zur Erzeugung einer diffusen, dem Tageslicht entsprechenden, Beleuchtung dient. Um die Höhe des Meßkopfes nicht verändern zu müssen, ist der Sockel 7 mit einer Federandruckvorrichtung versehen, bei der eine den Ansatz 7.1 tragende Hülse 7.2 durch die Wirkung einer innerhalb derselben angeordnete Schraubenfeder 7.3 gegenüber einem Standrohr 7.4 nach oben in Richtung auf den Meßkopf gedrückt wird.

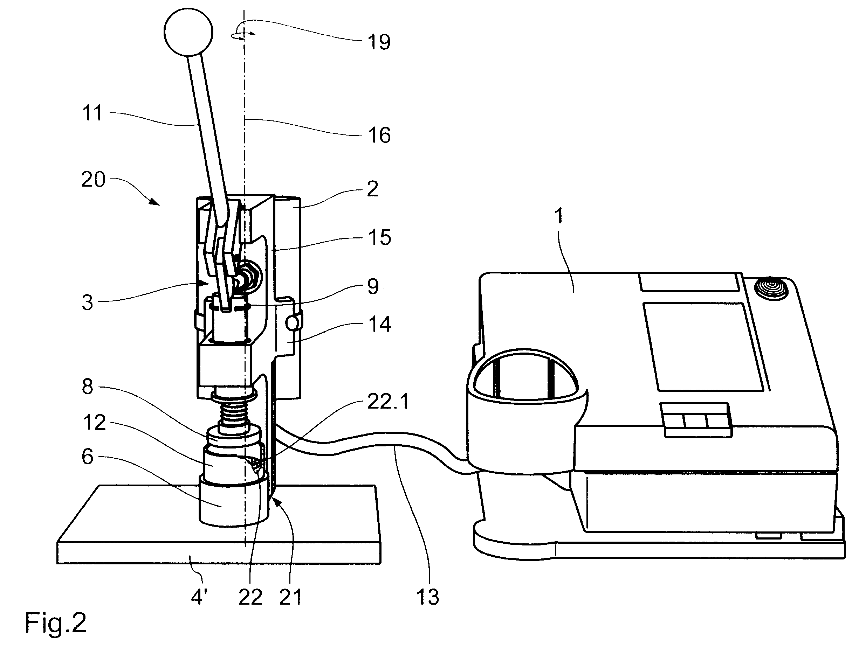

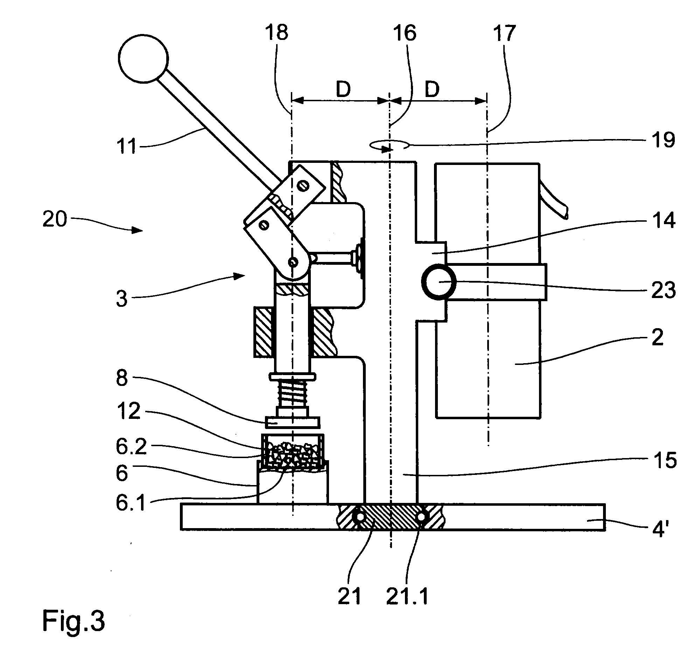

Eine in den Figuren 2 und 3 dargestellte Weiterbildung der zur Durchführung des Farbmeßverfahrens verwendbaren Vorrichtung 20 ermöglicht durch eine in Bezug auf den Probenbehälter 12 verschwenkbare Anordnung von Meßkopf 2 und Presse 3 eine weiter vereinfachte Handhabung. Während Figur 2 die Gesamtanordnung einschließlich Farbmeßgerät 1 zeigt, ist in Figur 3 die Anordnung von Meßkopf 2 und Presse 3 noch einmal im Detail in Seitenansicht dargestellt. Der Ständer 15 als gemeinsamer Träger von Meßkopf und Presse ist in der Trägerplatte 4' mittels eines Kugellagers 21 drehbar befestigt.

Der Ständer 15 der Hebelpresse 3 trägt gleichzeitig auf der dem Handhebel 11 bzw. dem Preßstempel 8 abgewandten Seite - d.h. um 180° versetzt angeordnet - eine Halterung 14, in welcher der mittels des Kabels 13 mit dem Farbmeßgerät 1 verbundene Meßkopf 2 befestigt ist. Die Halterung 14 ist derart ausgebildet, daß der Abstand zwischen der Längsachse 16 des Ständers 15 und der Achse 17 des Meßkopfes 2 den gleichen Wert D aufweist wie der Abstand zwischen der Längsachse 16 des Ständers 15 und der Achse 18 des Stempels 8 der Hebelpresse 3.

Durch diese Ausgestaltung kann der Meßkopf 2 mittels einer Schwenkbewegung 19 des Ständers 15 der Hebelpresse 3 von 180° um dessen Längsachse 16 über dem Behälter 12 angeordnet werden, nachdem der zur Homogenisierung der Oberfläche 22.1 der zu vermessenden Probe 22 körnigen Materials verfahrensgemäß durchzuführende Preßvorgang beendet ist.

Der Behälter 12 mit der verpreßten Probe 22 verbleibt (nach einer Drehung um 180°) auf der Matrize 6, so daß die Verfahrensdurchführung erheblich vereinfacht wird.

In der Lagerung 21 sind Rastmittel 21.1 vorgesehen, welche eine exakte Positionierung des Meßkopfes 2 oder des Preßstempels 8 über der zu vermessenden Probe 22 sichern.

Die Halterung 14 weist ein handbedienbares Zahnstangengetriebe 23 auf, um die Halterung mit dem Meßkopf 2 in Richtung der Längsachse 17 des Meßkopfes vertikal verfahren zu können. Dadurch kann die Meßöffnung 2.1 des Meßkopfes 2 dicht über der zu vermessende Probe 22 positioniert werden, so daß Störungen durch Fremdlicht bei der Farbmessung weitestgehend vermeidbar sind.

Die Arbeitsweise entspricht im wesentlichen derjenigen bei dem Ausführungsbeispiel gemäß den Figuren 1 bis 1b. Zusätzlich ergibt sich neben dem platzsparenden Aufbau auch noch der Vorteil, daß das Einfüllen des Probengutes in den auf die Matrize 6 als Gegenelement aufgesetzten Behälter 12 dadurch erleichtert ist, daß hierzu die gemeinsame Anordnung von Presse und Meßkopf quer ausgerichtet werden kann, so daß die Öffnung des Behälters 12 zum Einfüllen frei zugänglich ist. Dasselbe gilt für die Handhabung des Schwenkens des Behälters um 180°, welche bevorzugt ebenfalls durchgeführt wird, wenn sich beide Geräte in Querstellung befinden. Im Gegensatz zu der in Figur 1a dargestellten Vorrichtung wird hier bei dem Meßkopf zweckmäßigerweise eine Vorrichtung vorgesehen, um diesen zur Messung geringfügig abzusenken.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Hierzu gehören insbesondere Vorrichtungen, bei denen die Handhabungen - gesteuert durch einen geeigneten Prozessor - automatisiert erfolgen. Dies gilt für die Ausführung gemäß den Figuren 2 und 3. Dabei kann insbesondere auch das Schwenken des Probenbehälters um 180° über einen entsprechenden, mit der zentralen Säule verbundenen Antrieb automatisiert werden.

## Patentansprüche

1. Verfahren zur Messung der Farbe einer in einem Behälter (12) befindlichen Probe von körnigem, vorzugsweise granuliertem, Gut mittels eines einen Meßkopf (2) und eine Auswerteeinrichtung aufweisenden Farbmeßgeräts (1), durch Erfassung der Remission eines von dem Meßkopf auf die Oberfläche der Probe (22) ausgesandten Meßstrahls, bei dem
- die Probe (22) in einen rahmen- oder ringförmigen Behälter (22.1) eingefüllt wird,
- zur Erzeugung einer für die Messung im wesentlichen homogenen und ebenen Probenoberfläche von einer der offenen Seiten des Behälters (22.1) her mittels einer Presse (3) durch einen Preßstempel (8) gegen ein die andere Öffnungsseite abschließendes, eine Andruckfläche (6.1) mit einer glatten Oberfläche aufweisendes Gegenelement (6) als Matrize auf die Probe (22) ein Preßdruck ausgeübt wird sowie
- nach Entfernen von Gegenelement (6) und Probe (22) voneinander die Farbmessung mittels des Meßkopfes (2) von der Seite her vorgenommen wird, welche zuvor dem Gegenelement benachbart war.

2. Verfahren nach Anspruch 1, **dadurch gekennzeichnet**, daß der Meßkopf (2) während der Messung mit der eine Blendenöffnung (2.2) umgebenden Frontfläche (2.1) an dem rahmen- oder ringförmigen Behälter anliegt.

3. Verfahren nach Anspruch 1, **dadurch gekennzeichnet**, daß die ebene Oberfläche des Gegenelements (6) poliert ist.

4. Verfahren nach einem der vorangehenden Ansprüche, **dadurch gekennzeichnet** daß der rahmen- oder ringförmige Behälter (12) hohlzylindrisch ausgestaltet ist.

5. Verfahren nach einem der vorangehenden Ansprüche, **dadurch gekennzeichnet** daß das Schwenken des Behälters (12) nach dessen Entfernen von dem eine Matrize bildenden Gegenelement (6) erfolgt.

6. Verfahren nach einem der vorangehenden Ansprüche, **dadurch gekennzeichnet**, daß die Presse (3) manuell betätigt wird.

7. Verfahren nach einem der vorangehenden Ansprüche, **dadurch gekennzeichnet**, daß sowohl die Pressung als auch die Messung, bezogen auf die Probe, von oben her erfolgen und daß der die Probe enthaltende Behälter (12) zwischen Pressung und Messung um 180° um eine horizontale Achse geschwenkt wird.

8. Verfahren nach Anspruch 7, **dadurch gekennzeichnet**, daß zum Verpressen und Vermessen der Probe der Behälter (12) einerseits und Preßstempel (8) und Meßkopf (2) andererseits relativ zueinander in horizontaler Richtung verschwenkt werden, so daß durch Schwenkbewegung und die Verschwenkung um die horizontale Achse der Preßstempel (8) und das Meßgerät (2) nacheinander mit der auf der die Matrize bildenden Aufnahme im Behälter (12) befindlichen Probe in Wechselwirkung treten.

9. Vorrichtung zur Durchführung des Verfahrens nach einem der vorhergehenden Ansprüche,
**gekennzeichnet durch**
- durch einen rahmen- oder ringförmigen Behälter (12) zur Aufnahme der Probe (22),
- eine Presse (3) zum Komprimieren der Probe (22) mit einem eine ebene Stirnfläche aufweisenden Preßstempel (8), dessen Querschnitt an den Innenquerschnitt des Behälters (12) derart angepaßt ist, daß der Preßstempel, wenn er in das Behälter eindringt, dessen Innenquerschnitt im wesentlichen vollständig ausfüllt,
- ein eine ebene, zur Anlage an den rahmen- oder ringförmigen Behälter (12) bestimmte Druckfläche aufweisendes Gegenelement (6), dessen Druckfläche einen Querschnitt aufweist, der den Öffnungsbereich des Behälters überragt,
- einen eine ebene Stirnfläche aufweisende Meßkopf (2) mit einer Blende (2.2), welche eine ebene Anlagefläche (2.1) für den rahmen- oder ringförmigen Behälter aufweist, wobei der freie Querschnitt der Blende kleiner ist als der Öffnungsbereich des rahmen- oder ringförmigen Behälters.

10. Vorrichtung nach Anspruch 9, **dadurch gekennzeichnet**, daß eine Haltevorrichtung für den Meßkopf (2) als ein neben der Presse angeordnetes, Einspannmittel aufweisendes Gestell (5) ausgebildet ist.

11. Vorrichtung nach Anspruch 9, **dadurch gekennzeichnet**, daß unter dem Preßstempel (8) der Presse (3) bzw. unter der Meßöffnung (2.1) des Meßkopfes (2) auf einer Trägerplatte (4, 4') jeweils eine Aufnahmeeinrichtung (6, 7) für den die zu komprimierende bzw. die komprimierte Probe (22) enthaltenden Behälter (12) angeordnet ist.

12. Vorrichtung nach Anspruch 9, **dadurch gekennzeichnet**, daß die Presse als Hebel- oder Gewindepresse (3) ausgebildet ist.

13. Vorrichtung nach Anspruch 9, **gekennzeichnet durch** eine als Tablettenpresse (3) ausgebildete Presse, welche einen mit einer Trägerplatte (4, 4') verbundenen Ständer (15) aufweist.

14. Vorrichtung nach Anspruch 13, **dadurch gekennzeichnet**, daß der Ständer (15) der Presse (3) um seine Längsachse (16) schwenkbar an der Trägerplatte (4') gelagert ist und eine Halterung (14) für den Meßkopf (2) des Farbmeßgerätes (1) aufweist.

15. Vorrichtung nach Anspruch 9, **dadurch gekennzeichnet**, daß die Halterung (14) für den Meßkopf (2) um einen Winkel, insbesondere von im wesentlichen 180°, versetzt zur der Preßvorrichtung (3) an einem gemeinsamen Ständer (15) befestigt sind.

16. Vorrichtung nach Anspruch 15, **dadurch gekennzeichnet**, daß der Abstand der Längsachse (17) des in der Halterung (14) befestigten Meßkopfes (2) von der Längsachse (16) des Ständers (15) gleich dem Abstand der Längsachse (18) des Preßstempels (8) der Preßvorrichtung (3) von der Längsachse (16) des Ständers (15) ist.

17. Vorrichtung nach Anspruch 9, **dadurch gekennzeichnet**, daß die Halterung (14) Mittel (23) aufweist, mit denen der damit verbundene Meßkopf (2) vertikal in Richtung seiner Längsachse (17) verfahrbar ist.

18. Vorrichtung nach Anspruch 9, **dadurch gekennzeichnet**, daß ein Sockel (7) als Träger für den Behälter (12) durch Federmittel (7.3) in Richtung auf den Meßkopf (2) vorgespannt ist.

19. Vorrichtung nach Anspruch 13, **dadurch gekennzeichnet**, daß der Ständer (15) in Bezug auf die Trägerplatte (4') kugelgelagert ist.

20. Vorrichtung nach Anspruch 15, **dadurch gekennzeichnet**, daß eine Lagerung (21) des Ständers (15) Rastmittel (21.1) aufweist, mittels derer der Ständer (15) in zwei gegeneinander, vorzugsweise um 180°, versetzten Stellungen fixierbar ist.
